# EUROPEAN PATENT SPECIFICATION

(11) **EP 2 366 622 B1**
(45) Date of publication and mention of the grant of the patent: **01.04.2015**
(21) Application number: 11156316.9
(22) Date of filing: 28.02.2011
(51) Int. Cl.: B64C 25/32, B64C 25/60

(54) **Aircraft landing gear assembly**
Flugzeugfahrwerkanordnung
Ensemble de train d'atterrissage d'avion

(30) Priority: 04.03.2010 GB 201003593
(43) Date of publication of application: 21.09.2011
(73) Proprietor: Airbus Operations Limited, Bristol BS34 7PA (GB)
(72) Inventor: Clark, Leslie John, Bristol BS99 7AR (GB); West, Colin John, Bristol BS99 7AR (GB); Sutton, David Alistair, Bristol BS99 7AR (GB)
(74) Representative: Ribeiro, James Michael

(56) References cited:
- CN-Y- 2 302 825
- CN-Y- 201 057 795
- US-A- 2 378 046
- US-A- 6 048 477

## Description

### FIELD OF THE INVENTION

The present invention relates to an aircraft landing gear assembly and a method of protecting an aircraft landing gear.

### BACKGROUND OF THE INVENTION

Aircraft landing gear can suffer impact damage and corrosion due to the presence of foreign objects on the runway such as, for example, runway de-icing materials. Airports use a variety of products for runway de-icing, but there are specific airports that use grit or sand in addition to chemical de-icers. Impact and corrosion damage can be particularly severe in these cases.

One known method of protecting the landing gear is to apply strips of impact resistant, durable, self-adhesive polyurethane film that affords a level of impact protection. This method is limited in that the adhesion between the polyurethane film and the structure is insufficient to resist the air drag forces when the gear is deployed. The film becomes detached and is lost and then has to be replaced/repaired.

Another known method of protecting the landing gear is to apply a sprayable elastomeric sealant that is subsequently protected with a layer of polyurethane topcoat spray applied over the sealant. The elastomeric sealant provides impact protection. However, because of the differences in the elastic properties of the sealant and the coating, impacts on the landing gear can cause the protective topcoat to become detached, exposing the underlying sealant layer. As the sealant is not fully resistant to some of the fluids used on commercial aircraft (such as phosphate ester hydraulic fluids), the loss of the topcoat and exposure to these fluids can lead to a deterioration in sealant properties. In addition, the erosion resistance of the sealant is limited and therefore the protective sealant layer can be progressively lost, under adverse conditions, simply due to erosion. Replacement of this protection layer is also time consuming and expensive due to its complexity and the nature of the materials.

US2378046 describes a protection boot for a landing gear with a main shock absorber comprising a cylinder and a piston. The boot is fitted to the piston in order to prevent the accumulation of sand, dust and dirt from jamming the piston when it is retracted into the cylinder. The boot is formed from a pair of ring segments which are stitched together at one end and secured to each other at the other end by a single length of cord. Optionally clamps may be used to secure the upper and lower ends of the boot to the cylinder and piston respectively. One problem with this design is that the mounting and removal of the boot to and from the piston (for example, during maintenance) is difficult and time consuming. Another problem is that it can provide insufficient protection to the landing gear from impact and corrosion damage, particularly from the runway de-icing materials described above. Another problem is that the cylinder of the main shock absorber is not protected.

### SUMMARY OF THE INVENTION

A first aspect of the invention provides an aircraft landing gear assembly comprising an impact protection boot mounted to a landing gear component, the impact protection boot comprising: a resilient inner impact energy absorption layer which engages the component; and an outer protective layer which substantially covers the impact energy absorption layer, wherein the inner layer is more compressible than the outer layer, and wherein the boot has first and second ends which are tied to each other by a connector which exerts oppositely directed forces on the first and second ends respectively, the forces being directed around the circumference of the boot so as to tighten the boot against the landing gear component.

A second aspect of the invention provides an impact protection boot comprising: a resilient inner impact energy absorption layer; an outer protective layer attached to the inner layer, the inner layer being more compressible than the outer layer; and a connector which is adapted to exert oppositely directed forces on first and second ends of the boot in order to tie them together, the forces being directed around the circumference of the boot so as to tighten the boot.

A third aspect of the invention provides a kit of parts comprising: an impact protection boot having a resilient inner impact energy absorption layer and an outer protective layer attached to the inner layer, the inner layer being more compressible than the outer layer; and one or more connectors, each connector comprising a strap which is adapted to exert oppositely directed forces on first and second ends of the boot, the forces being directed around the circumference of the boot so as to tighten the boot.

A further aspect of the invention provides a method of protecting an aircraft landing gear component from an impact with an impact protection boot comprising: a resilient inner impact energy absorption layer which engages the component; and an outer protective layer which substantially covers the impact energy absorption layer, the inner layer being more compressible than the outer layer, the method comprising: a) wrapping the boot around the landing gear component; b) securing first and second ends of the boot to each other with a connector which exerts oppositely directed forces on the first and second ends respectively, the forces being directed around the circumference of the boot so as to tighten the boot against the landing gear component; c) resiliently compressing the inner layer to absorb impact energy; and d) relaxing the inner layer so that it expands after step c).

Typically the connector comprises a strap and the oppositely directed forces are tension forces within the strap. The strap may comprises a first strap part which is coupled to the first end of the boot; and a second strap part which is coupled at one end to the second end of the boot and tied at the other end to the first strap part. Alternatively the strap may form a loop with its ends tied together.

Preferably the outer and/or inner layer of the boot is moulded to fit the shape of the component, in order to ensure an intimate fit.

The inner layer of the boot may be formed from a resilient foam comprising an array of closed cells. The foam may be formed from ethylene diene M-class (EPDM) rubber or any other suitable resilient material, typically an elastomer.

The outer layer may be formed from a thermoplastic or elastomeric material such as polytetrafluoroethylene (PTFE) or polyurethane (PU).

Typically the inner and outer layers are either bonded together by an adhesive layer, or co-cured.

The landing gear component may be the cylinder of a landing gear shock absorber, or any other landing gear component requiring protection.

Typically the first and second ends of the boot do not overlap.

Preferably the boot is not bonded to the landing gear component, although optionally an assembly aid such as a spot adhesive may be used to locate and secure the boot during installation.

### BRIEF DESCRIPTION OF THE DRAWINGS

Embodiments of the invention will now be described with reference to the accompanying drawings, in which:
Figure 1 is a schematic front view of the lower part of a fully deployed aircraft landing gear, including a close up view of part of the impact protection boot;
Figure 2 is a rear view of the cylinder and impact protection boot of Figure 1;
Figures 3 and 4 are plan and top elevation views respectively of a single-part strap attaching the two free ends of the impact protection boot together;
Figures 5 and 6 are plan and top elevation views respectively of an alternative two-part strap attaching the two free ends of the impact protection boot together;
Figure 7 is a section view of a moulding apparatus moulding the outer layer of the impact protection boot;
Figure 8 is a sectional view across the line A-A indicated on Figure 7;
Figure 9 is a section view of the moulding apparatus adding the inner layer of the impact protection boot; and
Figure 10 is a top elevation view of an alternative aircraft landing gear fitted with an alternative impact protection boot.

### DETAILED DESCRIPTION OF EMBODIMENT(S)

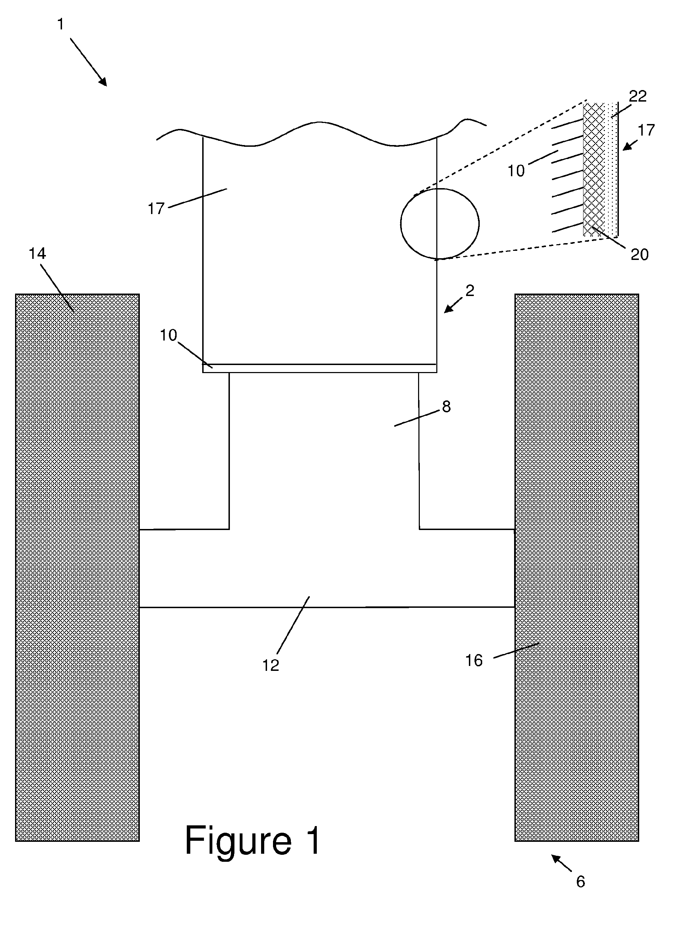

Figure 1 is a schematic front elevation view of a fully deployed aircraft landing gear 1 comprising a shock absorber 2 which extends vertically between the underside of an aircraft fuselage and a wheel assembly 6. The shock absorber 2 comprises a piston 8 and a cylinder 10. The cylinder 10 extends vertically downwards from the fuselage when the landing gear is deployed, while the piston 8 extends vertically downwards from the cylinder 10 to the wheel assembly 6. The wheel assembly 6 comprises a bogey 12 which extends horizontally between a pair of wheels 14, 16. The piston 8 has a distal end which is attached to the bogey 12 at a central position along its length and a proximal end which is housed within the cylinder 10. An impact protection boot 17 is mounted to the cylinder 10.

When the aircraft lands, the piston 8 is retracted upwards into the cylinder 10 in order to absorb the landing forces exerted on the wheel assembly 6.

The impact protection boot 17 is designed to protect the cylinder 10 from impact damage (from, for example, runway de-icing grit or sand thrown up by the wheels 14, 16) and to prevent it from coming into contact with corrosive substances (such as runway de-icing fluid). As shown most clearly in the close up view in Figure 1, the boot 17 comprises an inner layer 20 which engages the cylinder 10 and an outer layer 22 which (at least substantially) covers the inner layer 20. The inner layer 20 is formed from a resilient foam comprising an array of cells, which may be made from, for example, an elastomer such as ethylene diene M-class (EPDM) rubber or ethylenepropylene rubber. Preferably, the foam cells are closed in order to prevent the absorption of water, hydraulic fluids or other liquids by the foam. Closed cell foam is also more resilient than open cell foam. The outer layer 22 is formed from a hard wearing thermoplastic or elastomeric material such as PTFE or polyurethane.

When a foreign object impacts the outer layer 22 of the boot 17, the resilient inner layer 20 is compressed under the force of the impact, thus absorbing the impact energy, before relaxing so that it expands again after the impact. The outer layer provides both the inner layer 20 and the cylinder 10 with chemical and environmental protection. As the purpose of the inner layer 20 is to absorb impact energy from foreign objects, it is intentionally designed to be more compressible than the outer layer 22.

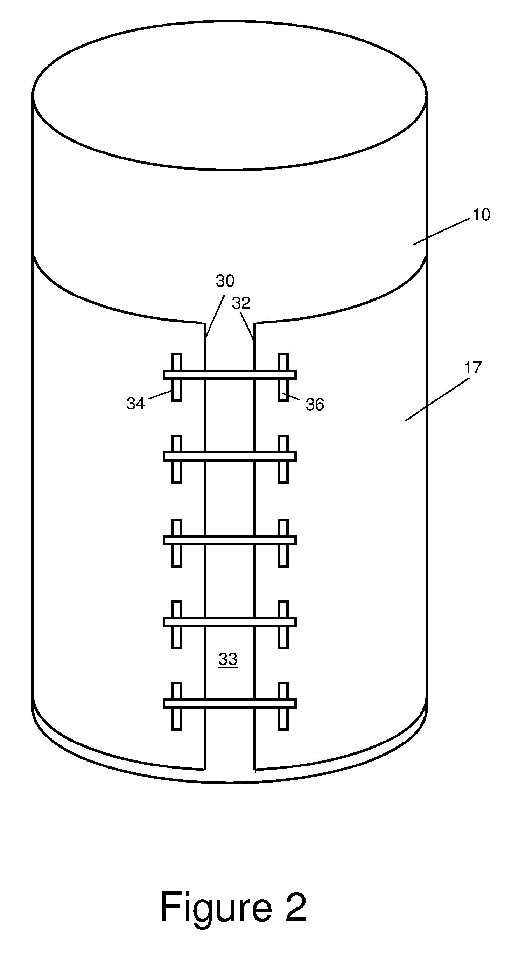

Figures 2-4 illustrate how the boot 17 is mounted to the cylinder 10. Before being mounted to the cylinder 10, the boot 17 has two free ends 30, 32. A series of belt-loops 34, 36 is provided down the length of each end 30, 32. To mount the boot 17 to the cylinder, it is wrapped around the cylinder 10 so that the two free ends 30, 32 oppose each other with a gap 33 between them as shown in Figure 2. Alternatively, the free ends 30, 32 may overlap or abut each other exactly so that there is no gap 33 between them. The belt-loops 34, 36 are positioned so that, when the boot is wrapped around the cylinder 10, the belt loops 34 on one end of the boot line up with the belt-loops 36 on the other end of the boot. A series of connectors is then fitted through opposing pairs of belt loops 34, 36 in order to secure the free ends 30, 32 of the boot together. Optionally, an assembly aid such as spot adhesive may be used to temporarily secure the boot directly to the cylinder at this point in the installation.

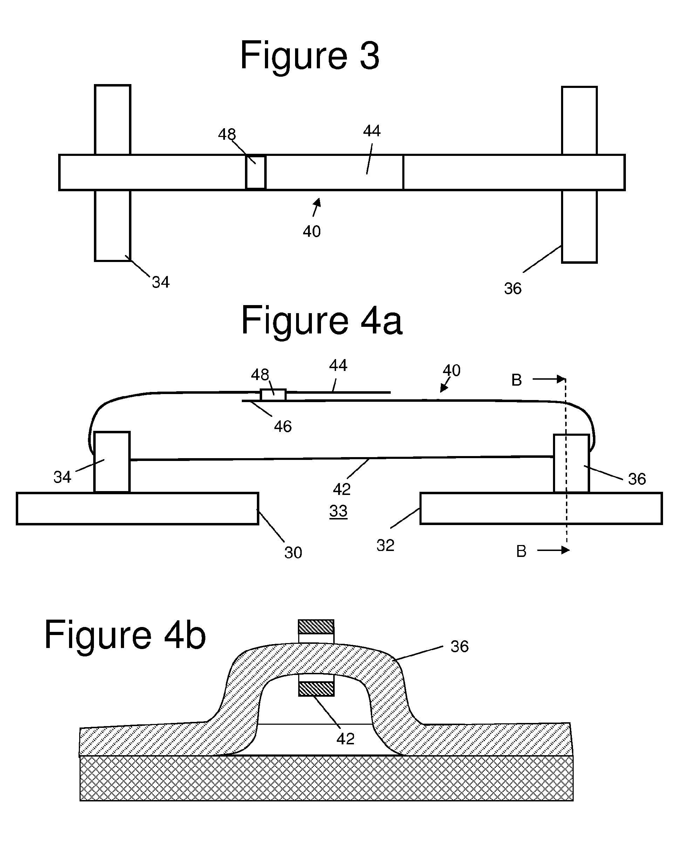

Any suitable connectors may be used to secure the free ends 30, 32 of the boot together. For example, as illustrated in Figures 3 and 4, a looped zip-tie 40 may be used. The zip-tie 40 comprises an elongate flexible strap 42 with first and second free ends 44, 46. On the first end 44, the zip-tie 40 has a series of resilient teeth (not shown) extending from its surface, while on the second end 46, the zip-tie has a block 48 with a passageway (now shown). The zip-tie 40 is passed through an opposing pair of belt-loops 34, 36 and the first end 44 of the zip-tie is passed through the passageway in the block 48 to form a loop. Each of the resilient teeth has a chamfered leading edge and a trailing edge which is wider than the passageway in the block 48. The interaction between the chamfered edges and the internal surface of the passageway causes the teeth to deform in order to pass through the passageway before expanding again. The perimeter of the passageway acts as a locking surface which engages the trailing edge of one of the teeth to prevent the withdrawal of the first end of the zip-tie from the passageway. The first end 44 of the zip-tie is pulled through the passageway and tightened so that it exerts oppositely directed tension forces on the first and second ends 30, 32 of the boot 17 via the belt-loops 34, 36, the forces being directed towards each other around the circumference of the boot 17. These tension forces tighten the boot against the cylinder 10 and ensure that a snug fit is achieved between the boot 17 and the cylinder 10.

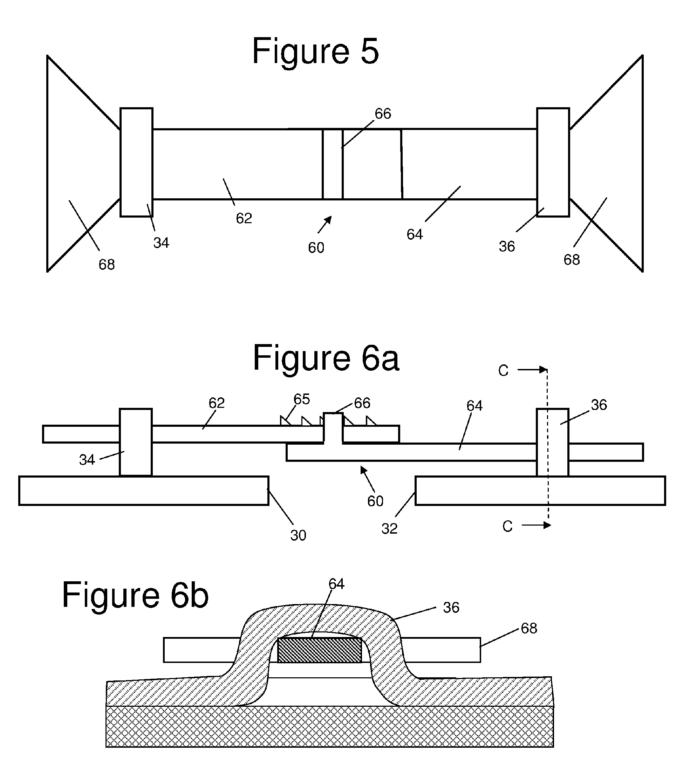

An alternative connector 60 is shown in Figures 5 and 6. In this case, the connector 60 comprises separate first and second strap parts 62, 64. In a similar way to the zip-tie 40, the first strap part 62 comprises an elongate strap with a distal end with a series of resilient teeth 65 extending from its surface, while the second part 64 comprises an elongate strap with a block 66 at its distal end. The teeth 65 on the first part 62 and the block 66 on the second part are identical to the teeth on the first end of the zip-tie 40 and the block 48 on the second end of the zip-tie respectively. Therefore, in order to secure the two parts 62, 64 of the connector 60 together, the first part 62 is passed through the passageway in the block 66 and tightened so that it exerts oppositely directed tension forces on the first and second ends 30, 32 of the boot as before. In this case, both straps are in tension. However, the separate first and second strap parts 62, 64 are only coupled together by their distal ends. The other ends of the strap parts 62, 64 have "crow's feet" stoppers 68 which engage the belt-loops 34, 36 to prevent the first and second strap parts 62, 64 of the connector 60 from being pulled through the belt-loops 34, 36.

It will also be understood that any other interlocking mechanism may be employed between the first and second strap parts (or the first and second ends of the connector) such as laces or bindings, while hooks or eyelets may be employed in place of the belt-loops 34, 36. It will be further understood that, rather than having straps which are formed separately from the boot 17, the straps and the boot 17 may be integrally formed. For example, each of the two strap parts 62, 64 of connector 60 may be integrally formed with a respective free end 30, 32 of the boot 17. In this case belt loops will not be required.

By attaching the boot 17 to the cylinder 10 by connectors rather than by, for example, adhesive, the boot can be fitted and removed much more easily. For example, the fit between the boot 17 and the cylinder 10 can be tightened by tightening the connectors rather than by first stretching the boot around the landing gear and using the connector to hold it in place, thus making installation easier. Moreover, the boot can be removed from the landing gear by cutting the connectors with a knife (or by disconnecting the connectors in any other way) and unwrapping the boot 17 from the cylinder. This is particularly advantageous, for example, when ultrasonic testing is required to be performed on the landing gear structure as the time taken by maintenance engineers to remove and re-mount (or replace) the boot is greatly reduced.

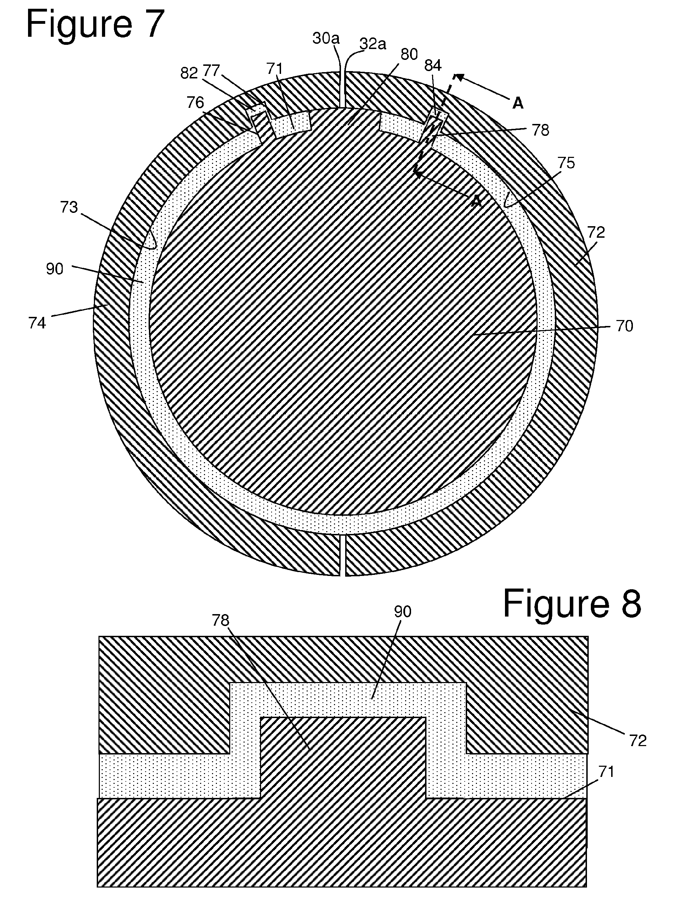

Figures 7-9 illustrate a method of manufacturing the boot 17. Figure 7 is a transverse section view through a first substantially cylindrical inner mould tool 70 and a pair of arcuate outer mould tools 72, 74. The inner mould tool 70 has a ridge 80 which projects from its outer surface 71 and extends along its length. The outer surface of the inner mould tool 70 is also provided with a series of bosses (two of which 76, 78 are shown in Figure 7) which are positioned at regular intervals along the length of the mould tool 70 on either side of the ridge 80. The outer mould tools 72, 74 are provided with a corresponding series of recesses (two of which 82, 84 are shown in Figure 7) in their inner surfaces 73, 75. The recesses 82, 84 are aligned with the bosses 76, 78 such that the bosses 76, 78 partially fill the recesses 82, 84. This is illustrated most clearly in Figure 8, which is a cross section along line A-A indicated in Figure 7. As shown in Figure 8, the recesses 82, 84 are wider than the bosses 76, 78. Moreover, the outer surfaces of the bosses 76, 78 are prevented from engaging with the inner surfaces of the recesses 82, 84 by the interaction between the outer surface of the ridge 80 and the inner surfaces 73, 75 of the outer mould tools 70, 72.

To form the outer protective layer 22 of the boot 17, a sheet of partially cured polyurethane 90 is wrapped most of the way around the inner mould tool 70, terminating either side of the ridge 80. The outer mould tools 72, 74 are then positioned around the polyurethane layer such that the recesses 82, 84 are aligned with the bosses 76, 78 on the outer surface of the inner mould tool 70 as described above. A force is applied to the outer mould tools 72, 74 towards the inner mould tool 70 so that the bosses 76, 78 press the polyurethane into the recesses 82, 84 in order to form the belt-loops 34, 36. The polyurethane sheet is thus shaped by the outer surface of the cylindrical inner mould tool 70 and the inner surfaces 73, 75 of the arcuate outer mould tools 72, 74.

A thin gap 77 is present between the sides of the bosses 76, 78 and the sides of the recesses 82, 84. A thin layer of polyurethane fills this gap 77 and is punched out after the moulding process with a tool.

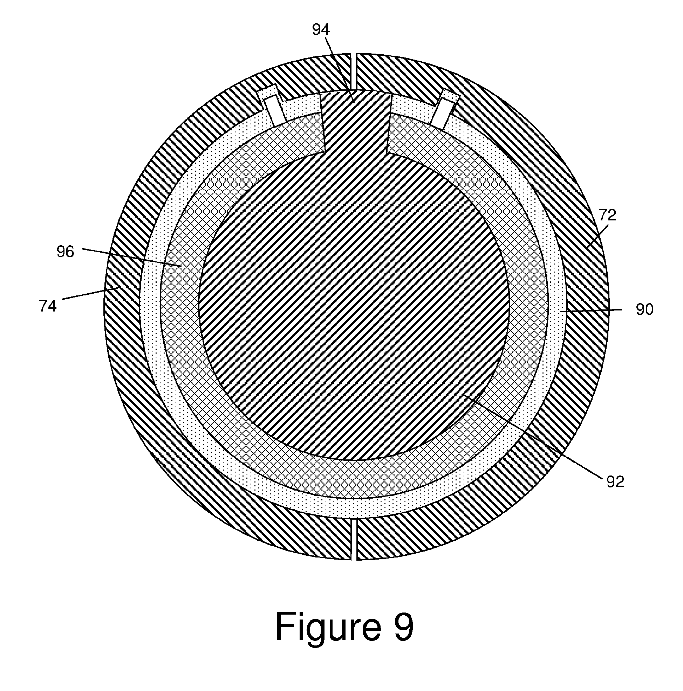

To create the inner impact protection layer 20 of the boot 17, the inner mould tool 70 is removed from the apparatus illustrated in Figure 7. The inner mould tool 70 is preferably made from wax, or a similar material with a relatively low melting point, so that it can be removed simply by heating it so that it melts away. As shown in Figure 9, the first inner mould tool 70 is replaced with a second inner mould tool 92, which is also provided with a ridge 94 projecting from its outer surface and extending along its length. The second inner mould tool 92 has a smaller outer diameter than the first inner mould tool 70 and is aligned with the polyurethane layer 90 such that the ridge 94 extends through the gap between the free ends of the polyurethane layer 90 and contacts the inner surfaces of the outer mould tools 72, 74. Liquid EPDM 96 is then injected into the region between the outer surface of the second inner mould tool 92 and the inner surface of the polyurethane layer 90. The EPDM 96 and the polyurethane layer 90 are then co-cured to create an integrally formed two-layer boot 17. During the cure process the liquid EPDM becomes a foam, and so called "skinning" will occur which will cause the foam to form inner and outer skin layers, making the foam completely closed-cell. No external forces are applied between the outer mould tools 72, 74 and the second inner mould tool 92 so that the foam is not compressed during cure. This maximises the foam's compressibility after manufacture.

It will be understood that the inner foam layer 20 may be formed separately from the outer polyurethane layer 22. In this case, the two separately formed layers 20, 22 may be adhesively bonded to each other before being mounted to the landing gear cylinder 10.

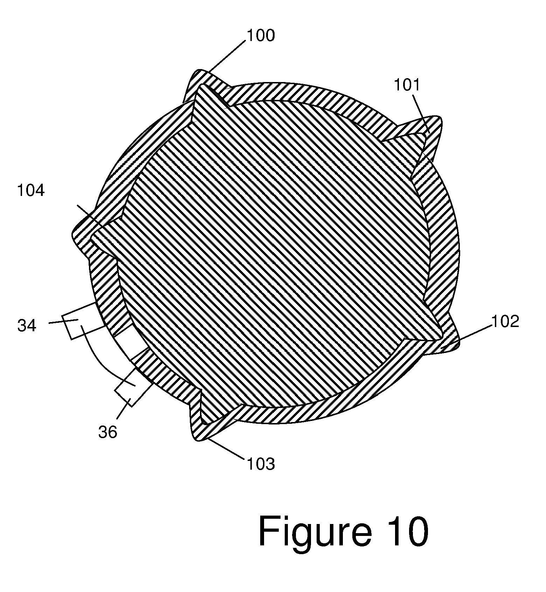

As illustrated in Figure 10, the outer surface of the cylinder 10 may be provided with a series of reinforcing webs 100-104. In this case, at least the outer layer 22 of the boot 17 is moulded to the shape of the outer surface of the cylinder 10 (including the webs 100-104) in order to achieve an intimate fit between them. This may be done by using the same manufacturing process as that described above, but replacing the first inner mould tool 70 with a mould tool which conforms to the shape of the cylinder 10 including the webs 100-104. Optionally the inner layer 20 may also be moulded to fit the shape of the cylinder 10, including the webs 100-104, in a similar way (i.e. by substituting the second inner mould tool 92 with a mould tool which conforms to the shape of the cylinder 10 including the webs 100-104).

As well as being provided with reinforcing webs 100-104, the cylinder 10 may also have other objects such as cables and other systems equipment on its outer surface. In this case, the shape of the outer layer 20 (and optionally the inner layer 22) of the boot 17 may be moulded to take account of these other objects.

Any of the embodiments described may be provided as a kit of parts comprising the boot and the connector straps, which can then be assembled *in situ*.

Although the invention has been described above with reference to one or more preferred embodiments, it will be appreciated that various changes or modifications may be made without departing from the scope of the invention as defined in the appended claims.

## Claims

1. An aircraft landing gear assembly comprising an impact protection boot (17) mounted to a landing gear component (10), wherein the boot has first and second ends (30,32) which are tied to each other by a connector (40), **characterised in** the impact protection boot comprising: a resilient inner impact energy absorption layer (20) which engages the component; and an outer protective layer (22) which substantially covers the impact energy absorption layer, wherein the inner layer is more compressible than the outer layer, and wherein the connector exerts oppositely directed forces on the first and second ends respectively, the forces being directed around the circumference of the boot so as to tighten the boot against the landing gear component.

2. The assembly of claim 1 wherein the connector comprises a strap and the oppositely directed forces are tension forces within the strap.

3. The assembly of claim 2 wherein the strap comprises a first strap part (62) which is coupled to the first end of the boot; and a second strap part (64) which is coupled at one end to the second end of the boot and tied at the other end to the first strap part.

4. The assembly of claim 2 wherein the strap (40) forms a loop with its ends tied together.

5. The assembly of any preceding claim wherein the outer and/or inner layer of the boot is moulded to fit the shape of the component.

6. The assembly of any preceding claim wherein the inner layer of the boot is formed from a resilient foam comprising an array of closed cells.

7. The assembly of any preceding claim wherein the landing gear component is the cylinder of a landing gear shock absorber.

8. The assembly of any preceding claim wherein the first and second ends of the boot do not overlap.

9. A method of protecting an aircraft landing gear component (10) from an impact with an impact protection boot (17), the method comprising:
a. wrapping the boot around the landing gear component; and
b. securing first and second ends of the boot to each other with a connector (40),
**characterised in that** the impact protection boot comprises a resilient inner impact energy absorption layer (20) which engages the component; and an outer protective layer (22) which substantially covers the impact energy absorption layer, the inner layer being more compressible than the outer layer,
wherein the connector exerts oppositely directed forces on the first and second ends respectively, the forces being directed around the circumference of the boot so as to tighten the boot against the landing gear component;
the method further comprising:
c. resiliently compressing the inner layer to absorb impact energy; and
d. relaxing the inner layer so that it expands after step c.

10. The method of claim 9 further comprising tightening the connector so that it exerts the oppositely directed tension forces on the first and second ends of the boot, the forces being directed around the circumference of the boot so as to tighten the boot against the landing gear component.

11. A method of disassembling the aircraft landing gear assembly of claim 1, the method comprising:
a. disconnecting the connector; and
b. unwrapping the boot from the component.

## Patentansprüche

1. Flugzeugfahrwerkanordnung, umfassend eine Prallschutzmanschette (17), die an einer Fahrwerk-Komponente (10) befestigt ist, wobei die Manschette ein erstes und ein zweites Ende (30, 32) aufweist, die miteinander durch ein Verbindungselement (40) gespannt sind, **dadurch gekennzeichnet, dass** die Prallschutzmanschette (17) umfasst: eine elastische innere Prallenergie-Dämpfungsschicht (20), welche mit der Komponente in Eingriff steht, und eine äußere Schutzschicht (22), welche die Prallenergie-Dämpfungsschicht im Wesentlichen abdeckt, wobei die innere Schicht stärker komprimierbar ist als die äußere Schicht, und wobei das Verbindungselement jeweils entgegengesetzt gerichtete Kräfte auf das erste und das zweite Ende ausübt, wobei die Kräfte um den Umfang der Manschette gerichtet sind, so dass die Manschette gegen die Fahrwerk-Komponente gestrafft wird.

2. Flugzeugfahrwerkanordnung nach Anspruch 1, wobei das Verbindungselement einen Gurt umfasst und die entgegengesetzt gerichteten Kräfte Zugkräfte innerhalb des Gurts sind.

3. Flugzeugfahrwerkanordnung nach Anspruch 2, wobei der Gurt einen ersten Gurt-Teil (62), der mit dem ersten Ende der Manschette verbunden ist, und einen zweiten Gurt-Teil (64) umfasst, der an einem Ende am zweiten Ende der Manschette verbunden ist und am anderen Ende mit dem ersten Gurt-Teil gespannt ist.

4. Flugzeugfahrwerkanordnung nach Anspruch 2, wobei der Gurt (40) eine Schlaufe mit zusammen gespannten Enden bildet.

5. Flugzeugfahrwerkanordnung nach einem der vorherigen Ansprüche, wobei die äußere und/oder innere Schicht der Manschette formgepresst ist, so dass sie sich der Form der Komponente anpassen.

6. Flugzeugfahrwerkanordnung nach einem der vorherigen Ansprüche, wobei die innere Schicht der Manschette aus einem elastischen Schaum ausgebildet ist, der eine Anordnung von geschlossenen Zellen umfasst.

7. Flugzeugfahrwerkanordnung nach einem der vorherigen Ansprüche, wobei die Fahrwerk-Komponente der Zylinder eines Fahrwerk-Stoßdämpfers ist.

8. Flugzeugfahrwerkanordnung nach einem der vorherigen Ansprüche, wobei sich das erste und das zweite Ende der Manschette nicht überlappen.

9. Verfahren zum Schutz einer Fahrwerk-Komponente (10) vor einem Prall mit einer Prallschutzmanschette (17), wobei das Verfahren umfasst:
a. Wickeln der Manschette um die Fahrwerk-Komponente und
b. Sichern des ersten und zweiten Endes der Manschette miteinander mit einem Verbindungselement (40),
**dadurch gekennzeichnet, dass** die Prallschutzmanschette eine elastische innere Prallenergie-Dämpfungsschicht (20), welche mit der Komponente in Eingriff steht, und eine äußere Schutzschicht (22) umfasst, welche die Prallenergie-Dämpfungsschicht im Wesentlichen abdeckt, wobei die innere Schicht stärker komprimierbar ist als die äußere Schicht,
wobei das Verbindungselement jeweils entgegengesetzt gerichtete Kräfte auf das erste und das zweite Ende ausübt, wobei die Kräfte um den Umfang der Manschette gerichtet sind, so dass die Manschette gegen die Fahrwerk-Komponente gespannt wird,
wobei das Verfahren ferner umfasst:
c. elastisches Komprimieren der inneren Schicht, um Prallenergie zu dämpfen, und
d. Entspannen der inneren Schicht, so dass sie sich nach Schritt c aufweitet.

10. Verfahren nach Anspruch 9, ferner umfassend das Verbinden des Verbindungselements, dass Spannen des Verbindungselements, so dass es die entgegengesetzt gerichteten Zugkräfte am ersten und zweiten Ende der Manschette ausübt, wobei die Kräfte um den Umfang der Manschette gerichtet sind, so dass die Manschette gegen die Fahrwerk-Komponente gespannt wird.

11. Verfahren zum Demontieren der Flugzeugfahrwerkanordnung nach Anspruch 1, wobei das Verfahren umfasst:
a. Trennen des Verbindungselements und
b. Abwickeln der Manschette von der Komponente.

## Revendications

1. Ensemble de train d'atterrissage d'aéronef comprenant un boudin de protection contre les chocs (17) monté sur un composant de train d'atterrissage (10), dans lequel le boudin comporte des première et deuxième extrémités (30, 32) qui sont reliées l'une à l'autre par un raccord (40), **caractérisé en ce que** le boudin de protection contre les chocs comprend : une couche d'absorption d'énergie de choc intérieure élastique (20) qui se met en prise avec le composant ; et une couche protectrice extérieure (22) qui recouvre sensiblement la couche d'absorption d'énergie de choc, dans lequel la couche intérieure est plus compressible que la couche extérieure, et dans lequel le raccord exerce des forces de sens opposés respectivement sur les première et deuxième extrémités, les forces étant dirigées autour de la circonférence du boudin de manière à serrer le boudin contre le composant de train d'atterrissage.

2. Ensemble selon la revendication 1, dans lequel le raccord comprend une sangle et les forces de sens opposés sont des forces de tension à l'intérieur de la sangle.

3. Ensemble selon la revendication 2, dans lequel la sangle comprend une première partie de sangle (62) qui est couplée à la première extrémité du boudin ; et une deuxième partie de sangle (64) qui est couplée, à une extrémité, à la deuxième extrémité du boudin et est reliée, à l'autre extrémité, à la première partie de la sangle.

4. Ensemble selon la revendication 2, dans lequel la sangle (40) forme une boucle avec ses extrémités reliées l'une à l'autre.

5. Ensemble selon l'une quelconque des revendications précédentes, dans lequel la couche extérieure et/ou la couche intérieure du boudin sont moulées pour correspondre à la forme du composant.

6. Ensemble selon l'une quelconque des revendications précédentes, dans lequel la couche intérieure du boudin est constituée d'une mousse élastique comprenant un réseau de cellules fermées.

7. Ensemble selon l'une quelconque des revendications précédentes, dans lequel le composant de train d'atterrissage est le vérin d'un amortisseur de choc de train d'atterrissage.

8. Ensemble selon l'une quelconque des revendications précédentes, dans lequel les première et deuxième extrémités du boudin ne se chevauchent pas.

9. Procédé de protection d'un composant de train d'atterrissage d'aéronef (10) contre les chocs avec un boudin de protection contre les chocs (17), le procédé comprenant :
a. l'enveloppement du boudin autour du composant de train d'atterrissage ; et
b. la fixation des première et deuxième extrémités du boudin l'une à l'autre avec un raccord (40),
**caractérisé en ce que** le boudin de protection contre les chocs comprend une couche d'absorption d'énergie de choc intérieure élastique (20) qui se met en prise avec le composant ; et une couche protectrice extérieure (22) qui recouvre sensiblement la couche d'absorption d'énergie de choc, la couche intérieure étant plus compressible que la couche extérieure,
dans lequel le raccord exerce des forces de sens opposés respectivement sur les première et deuxième extrémités, les forces étant dirigées autour de la circonférence du boudin de manière à serrer le boudin contre le composant de train d'atterrissage ;
le procédé comprenant en outre :
c. la compression élastique de la couche intérieure pour absorber l'énergie de choc ; et
d. le relâchement de la couche intérieure pour qu'elle se décompresse après l'étape c.

10. Procédé selon la revendication 9, comprenant en outre le serrage du raccord de sorte qu'il exerce les forces de tension de sens opposés sur les première et deuxième extrémités du boudin, les forces étant dirigées autour de la circonférence du boudin de manière à serrer le boudin contre le composant de train d'atterrissage.

11. Procédé de démontage de l'ensemble de train d'atterrissage d'aéronef selon la revendication 1, le procédé comprenant :
a. le débranchement du raccord ; et
b. le désenveloppement du boudin du composant.
